# EUROPEAN PATENT SPECIFICATION

(11) **EP 4 474 771 B1**
(45) Date of publication and mention of the grant of the patent: **11.11.2026**
(21) Application number: 24172131.5
(22) Date of filing: 24.04.2024
(51) Int. Cl.: G01C 23/00, G08G 5/26, G08G 5/34, G08G 5/53, G08G 5/76, G08G 5/00

(54) **FADING PILOT REPORT ICONS BASED ON VALIDITY OF REPORT**
EINBLENDUNG DER SYMBOLE EINES PILOTEN-REPORTS JE NACH GÜLTIGKEIT DES REPORTS
ICÔNES DE RAPPORT PILOTE S'ESTOMPANT EN FONCTION DE LA VALIDITÉ DU RAPPORT

(30) Priority: 11.05.2023 US 202318316123
(43) Date of publication of application: 11.12.2024
(73) Proprietor: Jeppesen ForeFlight, Inc., East Englewood, CO 80112 (US)
(72) Inventor: KUMAR, Nitin, Arlington, 22202 (US); GOTTSCHECK, Michael, Arlington, 22202 (US)
(74) Representative: Treeby, Philip David William

(56) References cited:
- US-A1- 2018 238 996
- US-B1- 7 612 688
- US-B1- 8 874 288

## Description

### BACKGROUND INFORMATION

### Technical Field:

The present disclosure relates generally to data management systems, and more specifically to visual depiction of pilot reports according to the age of the reports.

### Background:

A pilot report (PIREP) is a report submitted by a pilot regarding current or forecasted weather and flight conditions or other information that might pertain to flight safety. Such PIREPs are typically submitted to air traffic control or a flight service station. Examples of PIREPs include reports regarding turbulence, icing, thunderstorms, wind shear, and visibility.

PIREPs usually include location, altitude, time, and a description of the conditions in question. Such information can assist other pilots to make decisions regarding their own flights such as adjusting route or altitude.

US 2018/0238996 A1, according to its abstract, states a method for presenting weather information onboard an aircraft. The method obtains a first set of weather data from aircraft onboard radar system; obtains a second set of weather data from external sources including one or more external aircraft, a satellite, a remote server, and a ground-based weather station, wherein the communication device is compatible a communication protocol for the external sources, and wherein the communication protocol comprises at least one of a datalink communication protocol, a satellite communication protocol, a very high frequency (VHF) radio communication protocol, and a transponder communication protocol; and presents graphical elements comprising a first set of graphical elements associated with the first set of weather data and a second set of graphical elements associated with the second set of weather data, wherein the second set of graphical elements include visual characteristics distinguishable from the first set of graphical elements.

### SUMMARY

An illustrative embodiment provides a method as defined in claim 1.

Another illustrative embodiment provides a system for displaying pilot reports as defined in claim 13.

Another illustrative embodiment provides a computer program product for displaying pilot reports as defined in claim 7.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of a network of data processing systems in which illustrative embodiments can be implemented;
**Figure 2** is an illustration of a block diagram of a PIREP display system in accordance with an illustrative embodiment;
**Figure 3** depicts time based fading of PIREP icons in accordance with an illustrative embodiment;
**Figure 4** depicts a pictorial representation of fading PIREP icons relative to a flight plan in accordance with an illustrative embodiment;
**Figure 5** depicts a pictorial representation of continued fading of PIREP icons during flight progress in accordance with an illustrative embodiment;
**Figure 6** depicts a flowchart of a process for temporally displaying PIREPS in accordance with an illustrative embodiment; and
**Figure 7** is an illustration of a block diagram of a data processing system in accordance with an illustrative embodiment.

### DETAILED DESCRIPTION

The illustrative embodiments recognize and take into account that PIREPs are submitted by pilots regarding current or forecasted weather and flight conditions or other information that might pertain to flight safety. Such information can assist other pilots to make decisions regarding their own flights.

The illustrative embodiments also recognize and take into account that PIREPs generally have a validity of two hours. As the report ages, it becomes less significant for a flight.

The illustrative embodiments also recognize and take into account that existing solutions provide different icons that specify type and severity of PIREP conditions. However, existing solutions do not provide any indication regarding the age of a PIREP.

The illustrative embodiments provide a PIREP display system that progressively fades the PIREP icons according to their age. Thus, when a user observes a PIREP the user can make better informed decisions depending on where the aircraft will be relative to the location and darkness (opacity) of a PIREP icon. Therefore, the fading PIREP icons assist pilots and dispatcher in making forward looking decisions.

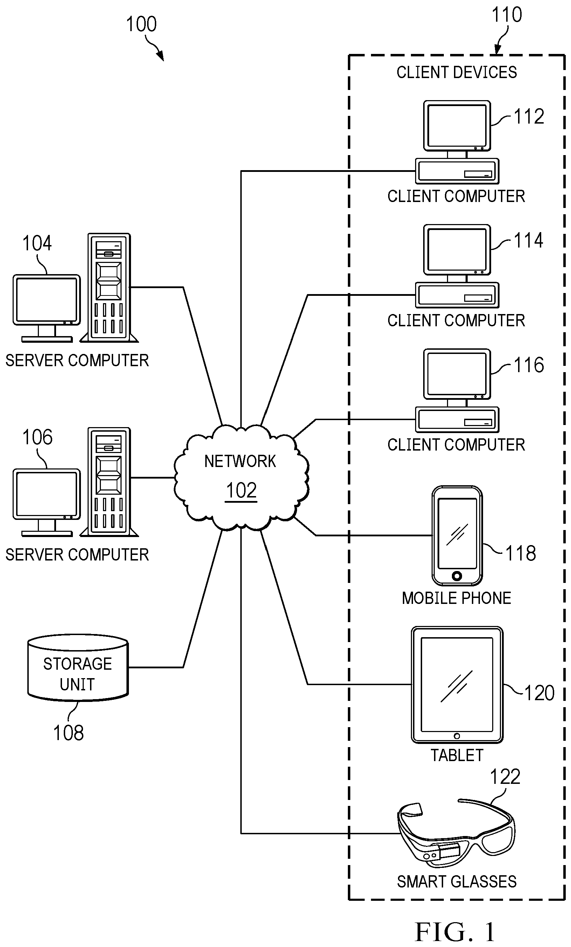

With reference to **Figure 1****,** a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** might include connections, such as wire, wireless communication links, or fiber optic cables.

In the depicted example, server computer **104** and server computer **106** connect to network **102** along with storage unit **108.** In addition, client devices **110** connect to network **102.** In the depicted example, server computer **104** provides information, such as boot files, operating system images, and applications to client devices **110.** Client devices **110** can be, for example, computers, workstations, or network computers. As depicted, client devices **110** include client computers **112, 114,** and **116.** Client devices **110** can also include other types of client devices such as mobile phone **118,** tablet computer **120,** and smart glasses **122.**

In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

Client devices **110** are clients to server computer **104** in this example. Network data processing system **100** may include additional server computers, client computers, and other devices not shown. Client devices **110** connect to network **102** utilizing at least one of wired, optical fiber, or wireless connections.

Program code located in network data processing system **100** can be stored on a computer-recordable storage medium and downloaded to a data processing system or other device for use. For example, the program code can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

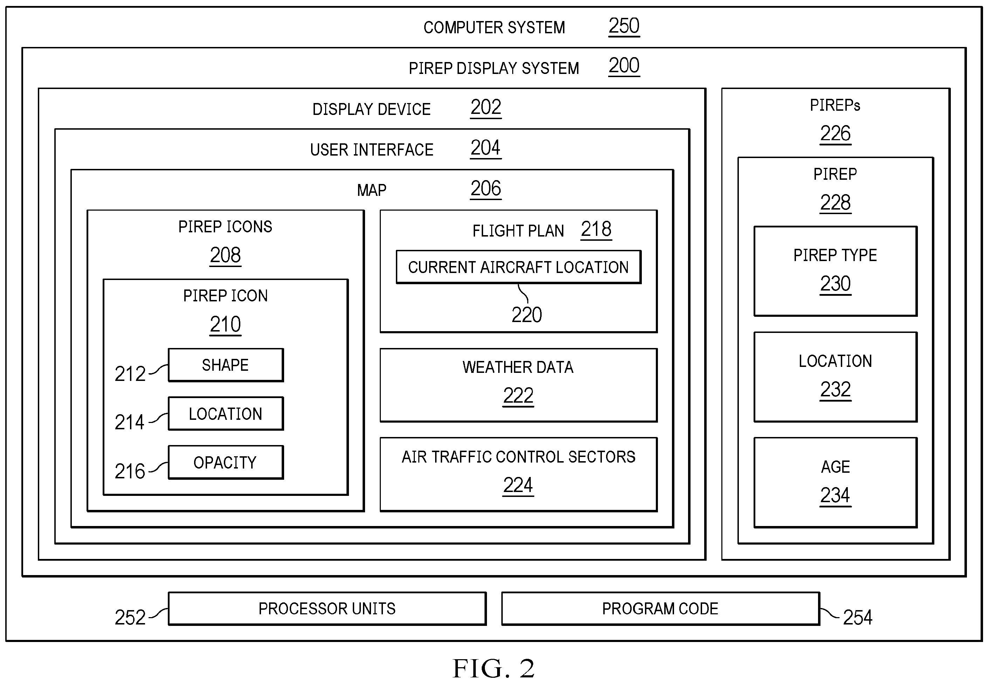

With reference now to **Figure 2****,** an illustration a block diagram of a pilot report (PIREP) display system is depicted in accordance with an illustrative embodiment. In this illustrative example, PIREP display system **200** includes components that can be implemented in hardware such as the hardware shown in network data processing system **100** in **Figure 1****.**

PIREP display system **200** receives a number of PIREPs **226** which have been submitted by pilots. Each PIREP **228** has a PIREP type **230.** Examples of PIREP types include turbulence PIREPs, icing PIREPs, weather PIREPs. PIREP **228** applies to a particular location **232** and has an age **234,** which refers to the lapsed time from when the PIREP was first submitted.

PIREP display system **200** provides information to a user in a user interface **204** generated by display device **202.** Display device **202** is a physical hardware system that might be part of, e.g., an electronic flight bag (EFB) which is an electronic information management system that assists flight crews in performing flight management tasks. User interface **204** can be a graphical user interface.

The display device **202** can include at least one of a light emitting diode (LED) display, a liquid crystal display (LCD), an organic light emitting diode (OLED) display, a computer monitor, a projector, a flat panel display, a heads-up display (HUD), a head-mounted display (HMD), or some other suitable device that can output information for the visual presentation of information.

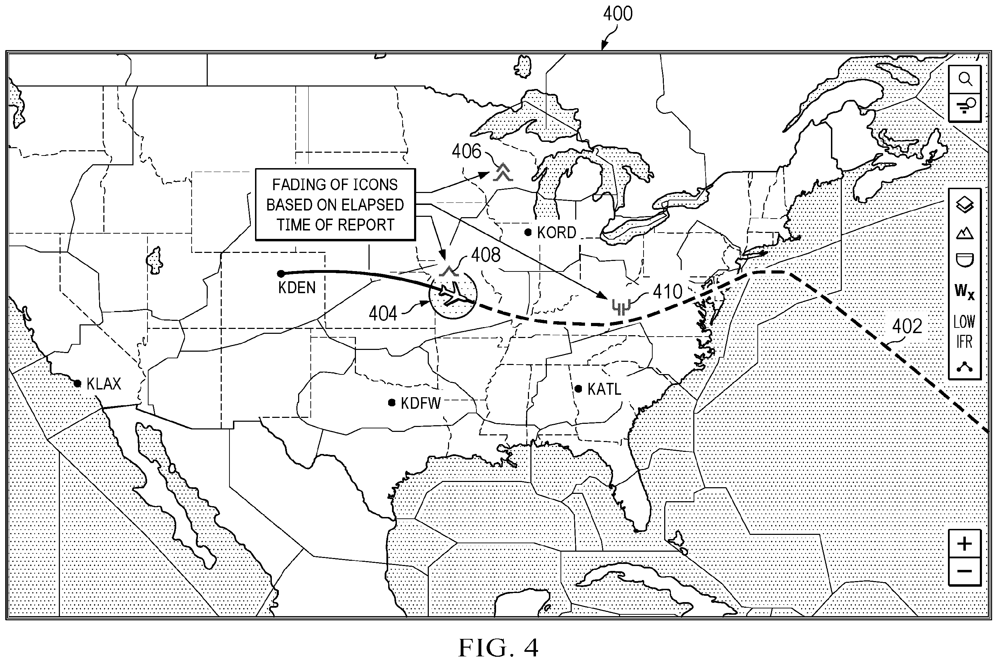

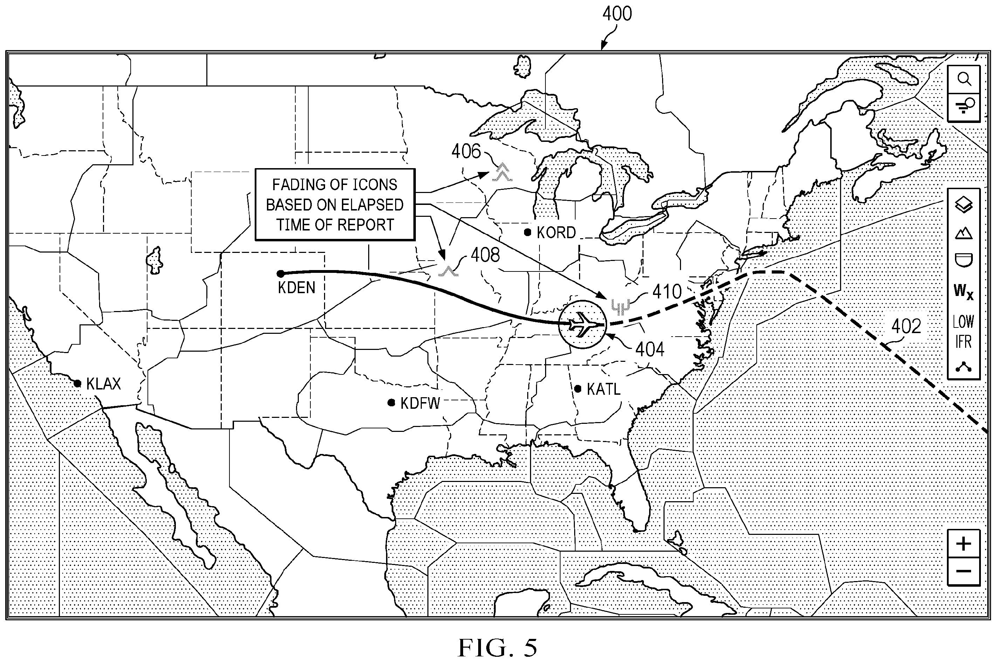

User interface displays a map **206** on which are projected a number of PIREP icons **208** corresponding to PIREPs **226.** Each PIREP icon **210** has a characteristic shape **212** corresponding to the PIREP type **230.** The PIREP icon **210** designates the location **214** on the map **206** to which the corresponding PIREP **228** applies. Each PIREP icon **210** is displayed in user interface **204** with a level of opacity **216.** The opacity **216** of each PIREP icon **210** progressively decreases with the age **234** of the corresponding PIREP **228** (see **Figure 4** and **5**).

User interface **204** also displays a flight plan **218** of an aircraft and the current aircraft location **220** along the flight plan. User interface **204** allows the user to see where the PIREPs **226** occur relative to the flight pan **218** and the likelihood that any PIREP along the flight plan will still be relevant by the time the aircraft reaches that location.

User interface **204** might also display weather data **222** as well as indications of air traffic control sectors **224** on map **206.**

PIREP display system **200** can be implemented in software, hardware, firmware, or a combination thereof. When software is used, the operations performed by PIREP display system **200** can be implemented in program code configured to run on hardware, such as a processor unit. When firmware is used, the operations performed by PIREP display system **200** can be implemented in program code and data and stored in persistent memory to run on a processor unit. When hardware is employed, the hardware can include circuits that operate to perform the operations in PIREP display system **200.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **250** is a physical hardware system and includes one or more data processing systems. When more than one data processing system is present in computer system **250,** those data processing systems are in communication with each other using a communications medium. The communications medium can be a network. The data processing systems can be selected from at least one of a computer, a server computer, a tablet computer, or some other suitable data processing system.

As depicted, computer system **250** includes a number of processor units **252** that are capable of executing program code **254** implementing processes in the illustrative examples. As used herein a processor unit in the number of processor units **252** is a hardware device and is comprised of hardware circuits such as those on an integrated circuit that respond and process instructions and program code that operate a computer. When a number of processor units **252** execute program code **254** for a process, the number of processor units **252** is one or more processor units that can be on the same computer or on different computers. In other words, the process can be distributed between processor units on the same or different computers in a computer system. Further, the number of processor units **252** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

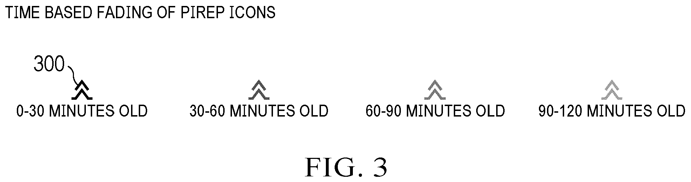

**Figure 3** depicts time based fading of PIREP icons in accordance with an illustrative embodiment. In the present example, the PIREP icon **300** for severe turbulence is depicted.

As shown in **Figure 3****,** the degree of opacity of the PIREP icon **300** progressively decreases in a stepwise manner every 30 minutes. For example, for the first 30 minutes, the PIREP icon **300** has full (100%) opacity. After 30 minutes, the opacity of PIREP icon **300** might decrease to 75%. After an hour, the opacity of PIREP icon **300** decreases to 50%, and after 90 minutes the opacity of PIREP icon **300** decreases to 25%. After two hours, the PIREP icon **300** disappears (i.e., 0% opacity).

The total length of time before the PIREP icon **300** disappears might be shorter or longer than two hours. Likewise, the degree of stepwise reduction of opacity might be greater or less than 25% increments.

Alternatively, PIREP icon **300** might fade in a gradual continuous manner. However, discrete stepwise changes in opacity might be easier for users to visually recognize.

**Figure 4** depicts a pictorial representation of fading PIREP icons relative to a flight plan in accordance with an illustrative embodiment. User interface **400** is an example of user interface **204** in **Figure 2****.** User interface **400** may be employed on an aircraft or in a flight control center.

User interface **400** shows a flight plan **402** for an airplane. Plane icon **404** indicates the current position of the airplane along that flight plan **402.** User interface **400** also displays a number of PIREP icons **406, 408, 410.** PIREP icon **406** represents sever turbulence, PIREP icon **408** represents moderate turbulence, and PIREP **410** represents moderate icing. The respective degrees of opacity and fading of the PIREP icons are based on elapsed time of the reports.

In the present example, the PIREP icon that is most relevant to the aircraft in question is PIREP icon **410,** which lies along the flight plan **402.** Based on the age (opacity) of PIREP **410** relative to the current position of plane icon **404** and flight speed of the aircraft in question, the user can determine the likelihood that the icing conditions represented by PIREP icon **410** will still be present and impact the flight by the time the aircraft reaches that location. For example, a dark, fully opaque PIREP icon at a location one and half hours ahead of the current location of an aircraft will not be as significant as a medium opaque (e.g., 50%) PIREP icon 30 minutes ahead of the aircraft.

**Figure 5** depicts a pictorial representation of continued fading of PIREP icons during flight progress in accordance with an illustrative embodiment. As shown in this view, the position of the airplane, represented by plane icon **404** has traveled closer to the location of PIREP icon **410.** However, by this time, PIREP icon **410** has almost completely faded, indicating that the icing conditions previously reported (e.g., 90 minute previously) will not be present when the airplane reaches that location.

As a counter example, if another PIREP reconfirming the continued presence of icing conditions had been submitted in the intervening time period between the views shown in Figures 4 and 5, a new, fully opaque PIREP icon would replace aged PIREP icon 410. As a result, the flight in quest might have to reroute to avoid hazardous conditions.

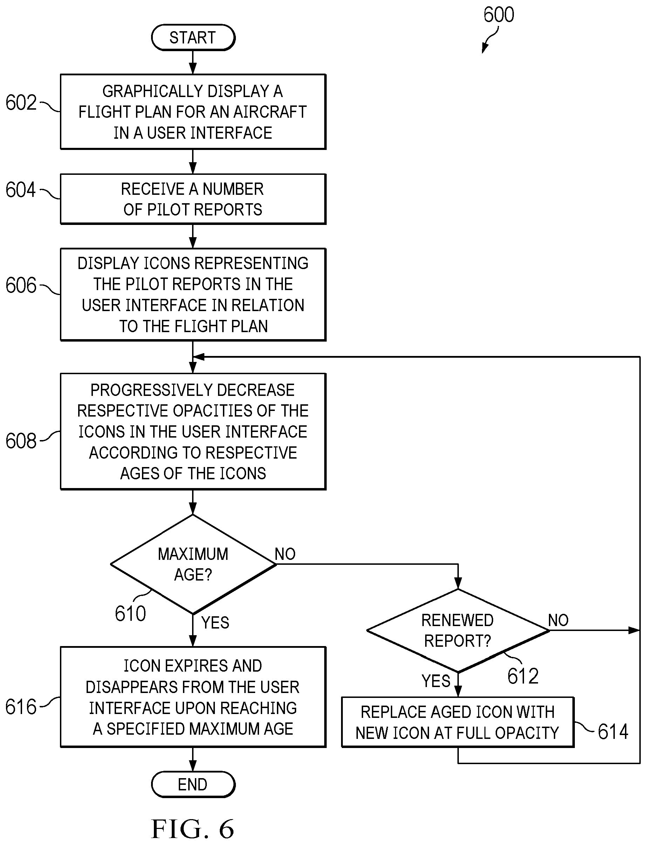

**Figure 6** depicts a flowchart of a process for displaying pilot reports (PIREPs) in accordance with an illustrative embodiment. The process in **Figure 5** can be implemented in hardware, software, or both. When implemented in software, the process can take the form of program code that is run by one of more processor units located in one or more hardware devices in one or more computer systems. For example, the process can be implemented in PIREP display system **200** in computer system **250** in **Figure 2****.**

Process **600** begins by graphically displaying a flight plan for an aircraft in a user interface (operation **602**).

The system receives a number of pilot reports (operation **604**) and displays icons representing the pilot reports in the user interface in relation to the flight plan (operation **606**).

The respective opacities of the icons are progressively decreased in the user interface according to the respective ages of the icons (operation **608**).

The system determined whether the displayed icons reach a specified maximum age (operation **610**). Responsive to a determination that a icon has not yet reached the specified maximum age, the system checks for renewed confirmation of the previous pilot report represented by the icon (operation **612**).

Responsive renewed confirmation of a previous pilot report represented by an aged icon, the aged icon is replaced with a new icon at full opacity (operation **614**).

Each icon expires and disappears from the user interface upon reaching the specified maximum age (operation **616**).

Process **600** then ends.

The flowchart and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware can, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams can be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

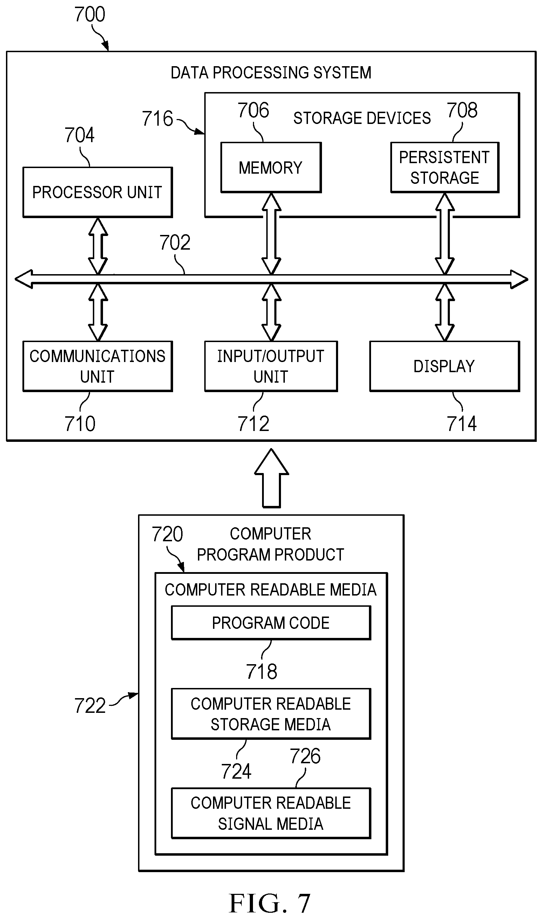

Turning now to **Figure 7****,** an illustration of a block diagram of a data processing system is depicted in accordance with an illustrative embodiment. Data processing system **700** may be used to implement server computers **104** and **106** and client devices **110** in **Figure 1****,** as well as computer system **250** in **Figure 2****.** In this illustrative example, data processing system **700** includes communications framework **702,** which provides communications between processor unit **704,** memory **706,** persistent storage **708,** communications unit **710,** input/output (I/O) unit **712,** and display **714.** In this example, communications framework **702** takes the form of a bus system.

Processor unit **704** serves to execute instructions for software that may be loaded into memory **706.** Processor unit **704** may be a number of processors, a multi-processor core, or some other type of processor, depending on the particular implementation. In an embodiment, processor unit **704** comprises one or more conventional general-purpose central processing units (CPUs). In an alternate embodiment, processor unit **704** comprises one or more graphical processing units (GPUs).

Memory **706** and persistent storage **708** are examples of storage devices **716.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **716** may also be referred to as computer-readable storage devices in these illustrative examples. Memory **706,** in these examples, may be, for example, a random access memory or any other suitable volatile or non-volatile storage device. Persistent storage **708** may take various forms, depending on the particular implementation.

For example, persistent storage **708** may contain one or more components or devices. For example, persistent storage **708** may be a hard drive, a flash memory, a rewritable optical disk, a rewritable magnetic tape, or some combination of the above. The media used by persistent storage **708** also may be removable. For example, a removable hard drive may be used for persistent storage **708.** Communications unit **710,** in these illustrative examples, provides for communications with other data processing systems or devices. In these illustrative examples, communications unit **710** is a network interface card.

Input/output unit **712** allows for input and output of data with other devices that may be connected to data processing system **700.** For example, input/output unit **712** may provide a connection for user input through at least one of a keyboard, a mouse, or some other suitable input device. Further, input/output unit **712** may send output to a printer. Display **714** provides a mechanism to display information to a user.

Instructions for at least one of the operating system, applications, or programs may be located in storage devices **716,** which are in communication with processor unit **704** through communications framework **702.** The processes of the different embodiments may be performed by processor unit **704** using computer-implemented instructions, which may be located in a memory, such as memory **706.**

These instructions are referred to as program code, computer-usable program code, or computer-readable program code that may be read and executed by a processor in processor unit **704.** The program code in the different embodiments may be embodied on different physical or computer-readable storage media, such as memory **706** or persistent storage **708.**

Program code **718** is located in a functional form on computer-readable media **720** that is selectively removable and may be loaded onto or transferred to data processing system **700** for execution by processor unit **704.** Program code **718** and computer-readable media **720** form computer program product **722** in these illustrative examples. In one example, computer-readable media **720** may be computer-readable storage media **724** or computer-readable signal media **726.**

In these illustrative examples, computer-readable storage media **724** is a physical or tangible storage device used to store program code **718** rather than a medium that propagates or transmits program code **718.** Computer readable storage media **724,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code 718 may be transferred to data processing system **700** using computer-readable signal media **726.** Computer-readable signal media **726** may be, for example, a propagated data signal containing program code **718.** For example, computer-readable signal media **726** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **700** are not meant to provide architectural limitations to the manner in which different embodiments may be implemented. The different illustrative embodiments may be implemented in a data processing system including components in addition to or in place of those illustrated for data processing system **700.** Other components shown in **Figure 7** can be varied from the illustrative examples shown. The different embodiments may be implemented using any hardware device or system capable of running program code **718.**

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A computer-implemented method (600) of displaying pilot reports, the method comprising:
using a number of processors to perform the operations of:
graphically displaying (602) a flight plan (218) for an aircraft in a user interface (204);
receiving (604) a number of pilot reports (226);
displaying (606) icons (208) representing the pilot reports in the user interface in relation to the flight plan;
progressively decreasing (608) respective opacities (216) of the icons in the user interface according to respective ages (234) of the icons, wherein each icon expires and disappears from the user interface upon reaching a specified maximum age (616);
determining (610) whether an aged icon among the icons has reached the specified maximum age and, responsive to a determination that the aged icon has not yet reached the maximum specified age, checking (612) for renewed confirmation of a previous pilot report represented by the aged icon; and
replacing (614) the aged icon with a new icon at full opacity responsive to renewed confirmation (612) of a previous pilot report represented by the aged icon.

2. The method of claim 1, wherein the opacities of the icons decrease in a stepwise manner.

3. The method of claim 2, wherein the opacities of the icons decrease approximately 25% every 30 minutes.

4. The method of claim 1, wherein the opacities of the icons decrease in a continuous manner.

5. The method of any preceding claim, further comprising displaying weather data (222) in the user interface.

6. The method of any preceding claim, wherein the flight plan and icons are displayed on a map (206) in the user interface.

7. A computer program product (722) for displaying pilot reports, the computer program product comprising:
a computer-readable storage medium having program instructions embodied thereon to perform the steps of:
graphically displaying (602) a flight plan (218) for an aircraft in a user interface (204);
receiving (604) a number of pilot reports (226);
displaying (606) icons (208) representing the pilot reports in the user interface in relation to the flight plan;
progressively decreasing (608) respective opacities (216) of the icons in the user interface according to respective ages (234) of the icons, wherein each icon expires and disappears from the user interface upon reaching a specified maximum age (616);
determining (610) whether an aged icon among the icons has reached the specified maximum age and, responsive to a determination that the aged icon has not yet reached the maximum specified age, checking (612) for renewed confirmation of a previous pilot report represented by the aged icon; and
replacing (614) the aged icon with a new icon at full opacity responsive to renewed confirmation (612) of a previous pilot report represented by the aged icon.

8. The computer program product of claim 7, wherein the opacities of the icons decrease in a stepwise manner.

9. The computer program product of claim 8, wherein the opacities of the icons decrease approximately 25% every 30 minutes.

10. The computer program product of any of claims 7 to 9, wherein the opacities of the icons decrease in a continuous manner.

11. The computer program product of any of claims 7 to 10, further comprising displaying weather data (222) in the user interface.

12. The computer program product of any of claims 7 to 11, wherein the flight plan and icons are displayed on a map (206) in the user interface.

13. A system (200) for displaying pilot reports, the system comprising:
a storage device (716) that stores a computer program product according to any of claims 7 to 12; and
one or more processors (252) operably connected to the storage device and configured to execute the program instructions.

## Patentansprüche

1. Computerimplementiertes Verfahren (600) zum Anzeigen von Pilotberichten, wobei das Verfahren Folgendes umfasst:
Verwenden einer Anzahl von Prozessoren zum Durchführen der folgenden Operationen:
grafisches Anzeigen (602) eines Flugplans (218) für ein Flugzeug in einer Benutzeroberfläche (204);
Empfangen (604) einer Anzahl von Pilotberichten (226);
Anzeigen (606) von Symbolen (208), die die Pilotberichte repräsentieren, in der Benutzeroberfläche mit Bezug auf den Flugplan;
fortschreitendes Verringern (608) von jeweiligen Opazitäten (216) der Symbole in der Benutzeroberfläche gemäß jeweiligen Altern (234) der Symbole, wobei jedes Symbol ausläuft und von der Benutzeroberfläche verschwindet, wenn es ein spezifiziertes maximales Alter erreicht (616);
Bestimmen (610), ob ein gealtertes Symbol unter den Symbolen das spezifizierte maximale Alter erreicht hat und in Antwort auf eine Bestimmung, dass das gealterte Symbol das maximale spezifizierte Alter noch nicht erreicht hat, Prüfen (612) auf eine erneute Bestätigung eines durch das gealterte Symbol repräsentierten früheren Pilotberichtes; und
Ersetzen (614) des gealterten Symbols durch ein neues Symbol mit voller Opazität in Antwort auf eine erneute Bestätigung (612) eines durch das gealterte Symbol repräsentierten früheren Pilotberichtes.

2. Verfahren nach Anspruch 1, wobei die Opazitäten der Symbole in einer schrittweisen Art und Weise verringert werden.

3. Verfahren nach Anspruch 2, wobei die Opazitäten der Symbole alle 30 Minuten um ungefähr 25% verringert werden.

4. Verfahren nach Anspruch 1, wobei die Opazitäten der Symbole in einer kontinuierlichen Art und Weise verringert werden.

5. Verfahren nach einem der vorangehenden Ansprüche, ferner umfassend Anzeigen von Wetterdaten (222) in der Benutzeroberfläche.

6. Verfahren nach einem der vorangehenden Ansprüche, wobei der Flugplan und die Symbole auf einer Karte (206) in der Benutzeroberfläche angezeigt werden.

7. Computerprogrammprodukt (722) zum Anzeigen von Pilotberichten, wobei das Computerprogrammprodukt Folgendes umfasst:
ein computerlesbares Speichermedium mit darauf eingebrachten Programminstruktionen zum Durchführen der folgenden Schritte:
grafisches Anzeigen (602) eines Flugplans (218) für ein Flugzeug in einer Benutzeroberfläche (204);
Empfangen (604) einer Anzahl von Pilotberichten (226);
Anzeigen (606) von Symbolen (208), die die Pilotberichte repräsentieren, in der Benutzeroberfläche mit Bezug auf den Flugplan;
fortschreitendes Verringern (608) von jeweiligen Opazitäten (216) der Symbole in der Benutzeroberfläche gemäß jeweiligen Altern (234) der Symbole, wobei jedes Symbol ausläuft und von der Benutzeroberfläche verschwindet, wenn es ein spezifiziertes maximales Alter erreicht (616);
Bestimmen (610), ob ein gealtertes Symbol unter den Symbolen das spezifizierte maximale Alter erreicht hat und in Antwort auf eine Bestimmung, dass das gealterte Symbol das maximale spezifizierte Alter noch nicht erreicht hat, Prüfen (612) auf eine erneute Bestätigung eines durch das gealterte Symbol repräsentierten früheren Pilotberichtes; und
Ersetzen (614) des gealterten Symbols durch ein neues Symbol mit voller Opazität in Antwort auf eine erneute Bestätigung (612) eines durch das gealterte Symbol repräsentierten früheren Pilotberichtes.

8. Computerprogrammprodukt nach Anspruch 7, wobei die Opazitäten der Symbole in einer schrittweisen Art und Weise verringert werden.

9. Computerprogrammprodukt nach Anspruch 8, wobei die Opazitäten der Symbole alle 30 Minuten um ungefähr 25% verringert werden.

10. Computerprogrammprodukt nach einem der Ansprüche 7 bis 9, wobei die Opazitäten der Symbole in einer kontinuierlichen Art und Weise verringert werden.

11. Computerprogrammprodukt nach einem der Ansprüche 7 bis 10, ferner umfassend Anzeigen von Wetterdaten (222) in der Benutzeroberfläche.

12. Computerprogrammprodukt nach einem der Ansprüche 7 bis 11, wobei der Flugplan und die Symbole auf einer Karte (206) in der Benutzeroberfläche angezeigt werden.

13. System (200) zum Anzeigen von Pilotberichten, wobei das System Folgendes umfasst:
eine Speichervorrichtung (716), die ein Computerprogrammprodukt nach einem der Ansprüche 7 bis 12 speichert; und
einen oder mehrere Prozessoren (252), die betreibbar mit der Speichervorrichtung verbunden und zum Ausführen der Programminstruktionen konfiguriert sind.

## Revendications

1. Procédé (600) mis en œuvre par ordinateur d'affichage de rapports pilote, le procédé comprenant :
une utilisation d'un certain nombre de processeurs pour réaliser les opérations suivantes :
un affichage graphique (602) d'un plan de vol (218) pour un aéronef dans une interface utilisateur (204) ;
une réception (604) d'un certain nombre de rapports pilote (226) ;
un affichage (606) d'icônes (208) représentant les rapports pilote dans l'interface utilisateur en relation avec le plan de vol ;
une diminution progressive (608) d'opacités (216) respectives des icônes dans l'interface utilisateur selon des âges (234) respectifs des icônes, dans lequel chaque icône expire et disparaît de l'interface utilisateur lorsqu'elle atteint un âge maximum spécifié (616) ;
une détermination (610) du fait de savoir si une icône vieillie parmi les icônes a atteint l'âge maximum spécifié et, en réponse à une détermination selon laquelle l'icône vieillie n'a pas encore atteint l'âge maximum spécifié, une vérification (612) d'une confirmation renouvelée d'un rapport pilote précédent représenté par l'icône vieillie ; et
un remplacement (614) de l'icône vieillie par une nouvelle icône à opacité complète en réponse à une confirmation renouvelée (612) d'un rapport pilote précédent représenté par l'icône vieillie.

2. Procédé selon la revendication 1, dans lequel les opacités des icônes diminuent de manière échelonnée.

3. Procédé selon la revendication 2, dans lequel les opacités des icônes diminuent d'environ 25 % toutes les 30 minutes.

4. Procédé selon la revendication 1, dans lequel les opacités des icônes diminuent de manière continue.

5. Procédé selon l'une quelconque des revendications précédentes, comprenant en outre un affichage de données météorologiques (222) dans l'interface utilisateur.

6. Procédé selon l'une quelconque des revendications précédentes, dans lequel le plan de vol et les icônes sont affichés sur une carte (206) dans l'interface utilisateur.

7. Produit programme informatique (722) pour afficher des rapports pilote, le produit programme informatique comprenant :
un support de stockage lisible par ordinateur ayant des instructions de programme incorporées sur celui-ci pour réaliser les étapes suivantes :
un affichage graphique (602) d'un plan de vol (218) pour un aéronef dans une interface utilisateur (204) ;
une réception (604) d'un certain nombre de rapports pilote (226) ;
un affichage (606) d'icônes (208) représentant les rapports pilote dans l'interface utilisateur en relation avec le plan de vol ;
une diminution progressive (608) d'opacités (216) respectives des icônes dans l'interface utilisateur selon des âges (234) respectifs des icônes, dans lequel chaque icône expire et disparaît de l'interface utilisateur lorsqu'elle atteint un âge maximum spécifié (616) ;
une détermination (610) du fait de savoir si une icône vieillie parmi les icônes a atteint l'âge maximum spécifié et, en réponse à une détermination selon laquelle l'icône vieillie n'a pas encore atteint l'âge maximum spécifié, une vérification (612) d'une confirmation renouvelée d'un rapport pilote précédent représenté par l'icône vieillie ; et
un remplacement (614) de l'icône vieillie par une nouvelle icône à opacité complète en réponse à une confirmation renouvelée (612) d'un rapport pilote précédent représenté par l'icône vieillie.

8. Produit programme informatique selon la revendication 7, dans lequel les opacités des icônes diminuent de manière échelonnée.

9. Produit programme informatique selon la revendication 8, dans lequel les opacités des icônes diminuent d'environ 25 % toutes les 30 minutes.

10. Produit programme informatique selon l'une quelconque des revendications 7 à 9, dans lequel les opacités des icônes diminuent de manière continue.

11. Produit programme informatique selon l'une quelconque des revendications 7 à 10, comprenant en outre un affichage de données météorologiques (222) dans l'interface utilisateur.

12. Produit programme informatique selon l'une quelconque des revendications 7 à 11, dans lequel le plan de vol et les icônes sont affichés sur une carte (206) dans l'interface utilisateur.

13. Système (200) pour afficher des rapports pilote, le système comprenant :
un dispositif de stockage (716) qui stocke un produit programme informatique selon l'une quelconque des revendications 7 à 12 ; et
un ou plusieurs processeurs (252) connectés fonctionnellement au dispositif de stockage et configurés pour exécuter les instructions de programme.
